(19) **Europäisches Patentamt / European Patent Office / Office européen des brevets**

(11) **EP 4 760 839 A1**

(12) **EUROPEAN PATENT APPLICATION**
published in accordance with Art. 153(4) EPC

(43) Date of publication:
**17.06.2026  Bulletin 2026/25**

(21) Application number: **25745453.8**

(22) Date of filing: **14.01.2025**

(51) International Patent Classification (IPC):
**H01M 10/04** *(2006.01)*    **H01M 4/04** *(2006.01)*
**G01B 21/02** *(2006.01)*

(52) Cooperative Patent Classification (CPC):
**G01B 21/02; H01M 4/04; H01M 10/04;** Y02E 60/10;
Y02P 70/50

(86) International application number:
**PCT/KR2025/000830**

(87) International publication number:
**WO 2025/159435 (31.07.2025 Gazette 2025/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.01.2024  KR 20240009448**

(71) Applicant: **LG Energy Solution, Ltd.**
**Seoul 07335 (KR)**

(72) Inventors:
• **SIM, Min Kyu**
  **Daejeon 34122 (KR)**
• **KIM, Min Su**
  **Daejeon 34122 (KR)**
• **PARK, Jong Seok**
  **Daejeon 34122 (KR)**
• **LEE, Dong Yeop**
  **Daejeon 34122 (KR)**
• **KANG, Kyu Taek**
  **Daejeon 34122 (KR)**
• **PARK, Jae Wan**
  **Daejeon 34122 (KR)**
• **KANG, Ju Ye**
  **Daejeon 34122 (KR)**

(74) Representative: **BCKIP Part mbB**
**Landsberger Straße 98**
**80339 München (DE)**

(54) **BATTERY MANUFACTURING SYSTEM AND BATTERY MANUFACTURING METHOD**

(57) Embodiments of the present disclosure provide a battery manufacturing system. The system includes a position measuring device configured to generate a sensing signal by sensing a position of an electrode sheet moving between an unwinder and a rewinder, a controller configured to collect position data of the electrode sheet, based on the sensing signal, and a measuring device and/or inspecting device configured to collect measurement data and/or inspection data of the moving electrode sheet and generate position-related measurement data and/or inspection data by relating the position data to the measurement data and/or inspection data. At least one of the controller or the measuring device and/or inspecting device corrects the position data of the electrode sheet, based on a change in an offset length.

[FIG. 1]

EP 4 760 839 A1

**Description**

[Technical Field]

The present disclosure relates to a battery manufacturing system and a battery manufacturing method.
This application claims the benefit of priority based on Korean Patent Application No. 10-2024-0009448, filed on January 22, 2024, and the entire content of the Korean patent application is incorporated herein by reference.

[Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.
A secondary battery is manufactured by an electrode process, an assembly process, and an activation process. Among these processes, the electrode process is a key process in determining the yield and performance of battery cells. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.
(Patent Document 1) Korean Laid-Open Patent Publication No. 10-2022-0134303

[Disclosure]

[Technical Problem]

The present disclosure is directed to providing a battery manufacturing system and method with improved quality traceability and data match in a battery manufacturing process.

[Technical Solution]

According to an aspect of the present disclosure, a battery manufacturing system includes a position measuring device configured to generate a sensing signal by sensing a position of an electrode sheet moving between an unwinder and a rewinder, a controller configured to collect position data of the electrode sheet, based on the sensing signal, and a measuring device and/or inspecting device configured to collect measurement data and/or inspection data of the moving electrode sheet and generate position-related measurement data and/or inspection data by relating the position data to the measurement data and/or inspection data. At least one of the controller or the measuring device and/or inspecting device corrects the position data of the electrode sheet based on a change in an offset length that is a length of the electrode sheet between the unwinder or the rewinder and a position on the electrode sheet at which the measurement data and/or inspection data is collected.
The offset length may include a length of the electrode sheet in a buffer section in which the length of the electrode sheet changes according to tension of the electrode sheet.
In embodiments, the position data may include at least one of coordinate data including coordinates indicating positions on the electrode sheet or pattern indicator data on a pattern electrode on which a coated portion and an uncoated portion are repeated in a longitudinal direction of the electrode sheet.
The position measuring device may include at least one of an encoder configured to generate at least one of an unwinding amount signal or a winding amount signal of the electrode sheet, or a pattern counter configured to count a pattern indicator on the pattern electrode.
At least one of the controller or the measuring device and/or inspecting device may correct the position data by subtracting or adding the offset length from or to position data of the electrode sheet collected based on a sensing signal from the position measuring device installed at a side of the unwinder or a side of the rewinder at a point in time when the measurement data and/or inspection data is collected.
The battery manufacturing system may further include a server configured to generate a roll map including the corrected position data and the measurement data and/or inspection data related to the corrected position data.
According to another aspect of the present disclosure, a battery manufacturing method includes collecting position data indicating a position of an electrode sheet moving between an unwinder and a rewinder and measurement data and/or inspection data of the moving electrode sheet, generating position-related measurement data and/or inspection data by relating the position data to the measurement data and/or inspection data, and correcting the position data of the electrode sheet based on a change in an offset length, the offset length being a length of the electrode sheet between the unwinder or the rewinder and a position on the electrode sheet at which the measurement data and/or inspection data is collected.

The offset length may include a length of the electrode sheet in a buffer section in which the length of the electrode sheet changes according to tension of the electrode sheet.

The position data may include at least one of coordinate data including coordinates indicating positions on the electrode sheet, or pattern indicator data on a pattern electrode on which a coated portion and an uncoated portion are repeated in a longitudinal direction of the electrode sheet.

The coordinate data may be collected based on at least one of an unwinding amount signal or a winding amount signal of the electrode sheet generated by an encoder.

The pattern indicator data may be calculated based on a pattern pitch, which is a distance between a coated portion and a neighboring coated portion on the pattern electrode, and a signal generated by the encoder.

The correcting of the position data may include correcting the position data by subtracting or adding the offset length from or to position data of the electrode sheet collected based on a sensing signal from a position measuring device installed at a side of the unwinder or a side of the rewinder at a point in time when the measurement data and/or inspection data is collected.

The battery manufacturing method may further include generating a roll map including the corrected position data and the measurement data and/or inspection data related to the corrected position data.

According to another aspect of the present disclosure, a battery manufacturing system includes a plurality of position measuring devices configured to generate a sensing signal by sensing positions of a plurality of electrode sheets moving between a plurality of unwinders and a winder, a controller configured to collect position data of each of the plurality of electrode sheets, based on the sensing signal, a plurality of measuring devices and/or inspecting devices configured to collect measurement data and/or inspection data of each of the moving electrode sheets and generate position-related measurement data and/or inspection data by relating the position data to the measurement data and/or inspection data, a plurality of cutters provided before the winder and configured to cut each of the electrode sheets by a predetermined length, and the winder configured to wind each of the cut electrode sheets to manufacture an electrode assembly,

The plurality of measuring devices and/or inspecting devices or the controller may correct the position data of the electrode sheet based on a change in an offset length, the offset length being a length of the electrode sheet between the unwinder or the cutter and a position on each of the plurality of electrode sheets at which the measurement data and/or inspection data is collected.

Another aspect of the present disclosure provides a battery manufacturing method in which a plurality of electrode sheets moving between a plurality of unwinders and a winder are cut by a predetermined length by a cutter and wound together by the winder to manufacture an electrode assembly, the battery manufacturing method including: collecting position data indicating a position of each of the plurality of electrode sheets moving between each of the plurality of unwinders and the winder and measurement data and/or inspection data of each of the moving electrode sheets; generating position-related measurement data and/or inspection data of each of the plurality of electrode sheets by relating the position data to the measurement data and/or inspection data; and correcting the position data of each of the plurality of electrode sheets based on a change in an offset length, the offset length being a length of each of the plurality of electrode sheets between each of the plurality of unwinders or the cutter and a position on each of the plurality of electrode sheets at which the measurement data and/or inspection data is collected.


[Advantageous Effects]

According to the present disclosure, when a length of an electrode sheet moving in an electrode manufacturing process changes, position data of the electrode sheet can be corrected by reflecting a change in the length of the electrode sheet.

Accordingly, the corrected position data and various data related thereto can be displayed on a roll map that is a simulated electrode imitating the moving electrode.

Therefore, it is possible to improve consistency between a position of an actual electrode and data corresponding thereto and the accuracy of data included in the roll map.

According to the present disclosure, when in a winding process in which electrode sheets are wound, a length of each of the electrode sheets changes, position data of the electrode sheets can be corrected by reflecting a change in the lengths of the electrode sheets. Accordingly, data consistency in the winding process can be improved.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

[Brief Description of the Drawings]

FIG. 1 illustrate a battery manufacturing system according to embodiments.

FIG. 2 illustrates measurement of an electrode sheet by a measuring device.

FIG. 3 illustrates a visualized roll map.

FIGS. 4 and 5 illustrate changes in a length of an electrode sheet in a buffer section.

FIGS. 6 and 7 illustrate an example of an offset length with respect to an unwinder or a rewinder.

FIG. 8 is a schematic diagram of a pattern electrode.

FIG. 9 illustrates a battery manufacturing system in which a pattern counter and an encoder are installed together.

FIG. 10 is a schematic diagram illustrating a pattern indicator counted based on a pattern pitch of a pattern electrode.

FIG. 11 illustrates an offset length in a battery manufacturing system to which a pattern counter is applied.

FIG. 12 is a flowchart of a battery manufacturing method according to embodiments.

FIG. 13 illustrates a battery manufacturing system according to embodiments.

FIG. 14 is a schematic diagram illustrating an example in which an electrode and a separator are wound to a predetermined length by a winder.

FIG. 15 is a flowchart of a battery manufacturing method according to embodiments.

[Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

(First Embodiment)

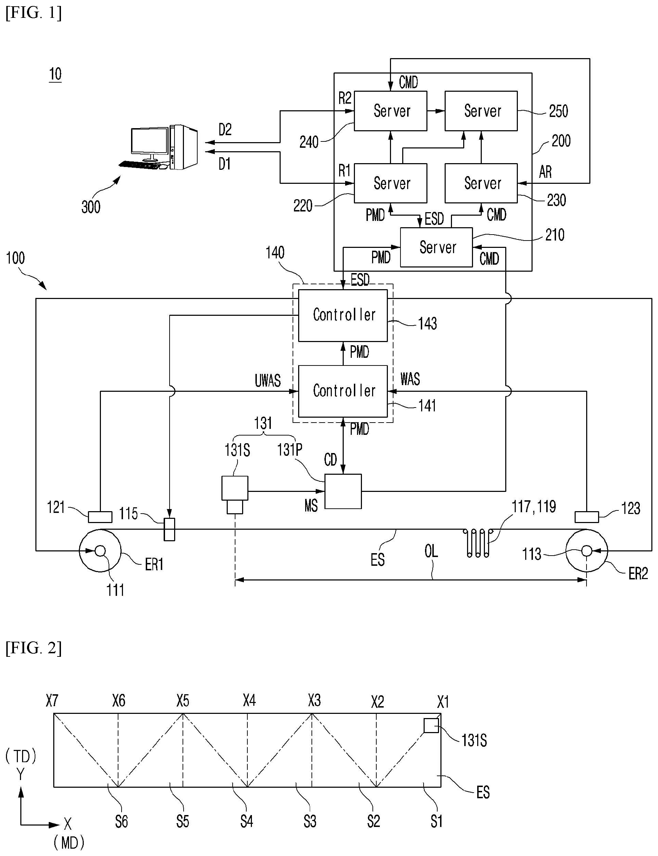

FIG. 1 illustrate a battery manufacturing system according to embodiments.
FIG. 2 illustrates measurement of an electrode sheet by a measuring device.

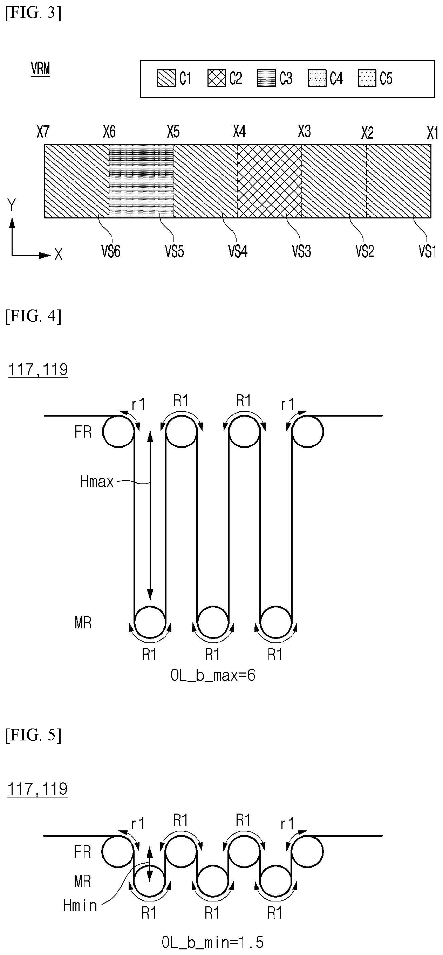

FIG. 3 illustrates a visualized roll map.

Referring to FIGS. 1 to 3, a battery manufacturing system 10 may include a battery manufacturing apparatus 100, a roll map generator 200, and a user device 300.

The battery manufacturing apparatus 100 may include an unwinder 111, a rewinder 113, a processing device 115, a first position measuring device, a second position measuring device, a measuring device and/or inspecting device 131, a first controller 141, and a second controller 143.

The unwinder 111 may be configured to wind an electrode sheet ES from an electrode roll ER1. The rewinder 113 may be configured to wind the electrode sheet ES into an electrode roll ER2. Accordingly, the electrode sheet ES may be moved between the unwinder 111 and the rewinder 113.

A process of manufacturing a battery (e.g., an electrode process) may be performed on the electrode sheet ES. The electrode process is performed on the electrode sheet ES unwound from the electrode roll ER1 and wound into the electrode roll ER2 and thus may be a roll-to-roll process.

The electrode sheet ES may be processed by the processing device 115. For example, the processing device 115 may include a coater, and the electrode sheet ES may be coated with an electrode slurry. As another example, the processing device 115 may include a pressing roll, and a roll pressing process may be performed on the electrode sheet ES coated with the electrode slurry. As another example, the processing device 115 may include a splicing die and a scrap port, and a portion of the electrode sheet ES may be scrapped. As another example, the processing device 115 may include a slitting knife, and the electrode sheet ES may be divided into a plurality of electrode sheets.

The first and second position measuring devices may be rotary encoder capable of indicating a position signal of an electrode, which is moved according to the amount of rotation of an unwinder or rewinder, in the form of an encoder value. Alternatively, the first and second position measuring devices may be linear encoders that indicate a position signal of an electrode, which corresponds to moving displacement of the electrode, in the form of an encoder value. The encoders may be configured to be in contact or not in contact with the electrode. Alternatively, these position measuring devices may be pattern counters for counting a pattern indicator on a pattern electrode. The pattern indicator may be an index indicating the position of a pattern on the pattern electrode. The pattern indicator may be numbers, letters, characters, symbols, codes, and/or a combination thereof.

In the present embodiment, the first and second position measuring devices are rotary encoders.

A first rotary encoder 121 may be configured to sense an amount of the electrode sheet ES unwound from the electrode roll ER1 by the unwinder 111. Accordingly, the first rotary encoder 121 may be configured to generate an unwinding amount signal UWAS indicating an unwinding amount of the electrode sheet ES. The first rotary encoder 121 may be configured to transmit the unwinding amount signal UWAS to the first controller 141. The first controller 141 may be configured to collect input amount data, based on the unwinding amount signal UWAS of the electrode sheet ES. The input amount data may represent the amount of a material (i.e., the electrode roll ER1) input into the battery manufacturing apparatus 100 to manufacture a battery.

A second rotary encoder 123 may be configured to sense an amount of the electrode sheet ES wound into the electrode roll ER2 by the rewinder 113. Accordingly, the second rotary encoder 123 may be configured to generate a winding amount signal WAS indicating a winding amount of the electrode sheet ES. The second rotary encoder 121 may be configured to transmit the winding amount signal WAS to the first controller 141. The first controller 141 may be configured to collect consumption amount data, based on the winding amount signal WAS of the electrode sheet ES. The consumption amount data may indicate a production result of the battery manufacturing apparatus 100.

As a non-limiting example, the first controller 141 and the second controller 143 may be programmable logic controllers (PLCs).

The first and second controllers 141 and 143 may include a power supply, a CPU, an input interface, an output interface, a communication interface, and memory devices. The communication interface may be configured to transmit and receive data between the first and second controllers 141 and 143 or between the second controller 143 and a server 210.

The first controller 141 may collect position data of the electrode sheet, based on a sensing signal of a rotary encoder. The position data may be coordinate data including coordinates representing positions on the electrode sheet. Alternatively, the position data may be pattern indicator data on the pattern electrode. Alternatively, the position data may include both coordinate data and pattern indicator data.

For example, the first controller 141 may be configured to collect coordinate data CD of the electrode sheet ES, based on one of the unwinding amount signal UWAS and the winding amount signal WAS of the electrode sheet ES. For example, the first controller 141 may determine a moving distance of the electrode sheet ES based on the winding amount signal WAS of the electrode sheet ES and thus a position of a part of the electrode sheet ES, which is to be wound by the rewinder 113, on the electrode sheet ES may be determined at each time point at which the coating process is performed. Hereinafter, the technical idea of the present disclosure will be described with respect to an embodiment in which the first controller 141 collects the coordinate data CD based on the winding amount signal WAS of the electrode sheet ES.

The coordinate data CD may include coordinates matching parts of the electrode sheet ES. That is, arbitrary points on the electrode sheet ES may have coordinates. The coordinates may be one-dimensional (1D) quantities in a machine direction MD in which the electrode sheet ES is moved (or a longitudinal direction of the electrode sheet ES) but are not limited thereto. The coordinates may be two-dimensional (2D) quantities in the machine direction MD and a transverse direction TD of the electrode sheet ES (or a width direction of the electrode sheet ES).

The measuring device 131 may be configured to measure the electrode sheet ES to collect measurement data. The measuring device 131 may be configured to scan the electrode sheet ES. The measuring device 131 may move in the transverse direction TD. During one scanning, a sensing part 131S of the measuring device 131 may move from one end of the electrode sheet ES in the transverse direction TD to another end of the electrode sheet ES in the transverse direction TD.

While the measuring device 131 performs scanning in the transverse direction TD, the electrode sheet ES may be moved in the machine direction MD by the unwinder 111 and the rewinder 113. Accordingly, a part of the electrode sheet ES measured by the measuring device 131 may be in a zigzag form as indicated by a one-dot chain line of FIG. 2. That is, the one-dot chain line of FIG. 2 may indicate a moving path of a field of measure (FOM) of the measuring device 130 according to the movement of the electrode sheet ES and the movement of the measuring device 130.

The measurement data may include measured results expressed in numerical values. For example, the measurement data may include dimension data, e.g., a thickness and a width, of the electrode sheet ES, loading amount data of a coating material on the electrode sheet ES, size data, e.g., a width of an insulating material on the coating material and an overlapping width between the coating material and the insulating material, mismatch data between lanes of coated portions of an upper surface of the electrode sheet ES and lanes of coated portions of a lower surface of the electrode sheet ES, and the like. Here, the loading amount is the amount of the coating material loaded per unit area of the electrode sheet ES, and may be an area density of the coating material.

As a non-limiting example, the measuring device 131 may be a web gauge of Thermofisher Scientific or a thickness meter.

The measuring device 131 may include the sensing part 131S and a processor 131P. The sensing part 131S may be configured to sense physical quantity of the electrode sheet ES to generate a measurement signal MS. For example, the sensing part 131S may include a time delay and integration (TDI) camera, a complementary metal oxide semiconductor (CMOS) image sensor, a time of flight (TOF) sensor, and the like. The sensing part 131S may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 131 may include a pressure sensor, a temperature sensor, an ultrasonic sensor, a proximity sensor, a door state sensor, a motion tracking sensor, a humidity sensor, a visible light and infrared sensor, a camera, etc.

The battery manufacturing apparatus 100 may further include an inspecting device configured to collect inspection data by inspecting the electrode sheet ES. Alternatively, the battery manufacturing apparatus 100 may include both a measuring device and an inspecting device. The battery manufacturing apparatus 100 may include a plurality of measuring devices and a plurality of inspecting devices. Similar to the measuring device, the inspecting device may include a sensing part and a processor.

The inspection data may include a judgement of the quality of a part of the electrode sheet ES and a process event. For example, the inspection data may include data about the appearance of the electrode sheet ES collected by an image-based inspection device such as a vision machine, data about disconnections and joints of the electrode sheet ES, data about a portion of the electrode sheet ES on which sampling inspection is performed, data about a portion of the electrode sheet ES to be scrapped, data about a scraped portion of the electrode sheet ES, data about whether the coating material and the insulating material on the electrode sheet ES are defective or not, data about datum points indicating positions of the electrode sheet ES, and defect data such as pinhole defects, crater defects and line defects. The datum points may be formed on the electrode sheet ES at predetermined intervals, and other elements on the electrode sheet ES may be located based on the datum points. The inspecting device may be a color sensor, a joint sensor, a datum point sensor, or a vision machine.

The measuring device 130 may be configured to collect two or more types of data. For example, the measuring device 131 may be configured to measure a thickness of the electrode sheet ES and a measured amount of the coating material on the electrode sheet ES (e.g., the loading amount of the coating material on the electrode sheet ES or the thickness of the electrode sheet ES). Alternatively, the measuring device 131 may be configured to sense datum points on the electrode sheet ES, in addition to measuring a mismatch of the electrode sheet ES.

The measurement data and the inspection data described above may be time series data. The measurement data and the inspection data may be temporally ordered. The measurement data and the inspection data ID may be indexed by time. The measurement data may include measured values and a time value (or time values) matching the measured values. The inspection data may include inspection values and a time value (or time values) matching the inspection values. That is, the measurement data and the inspection data may be stored based on a point in time when measurement and inspection are performed, and the measured values of the measurement data and the inspection values of the inspection data may be related to time. The time values of the measurement data and the inspection data may be, for example, in the form of timestamp but are not limited thereto.

The processor 131P may be configured to receive a measurement signal MS sensed by the sensing part 131S to collect measurement data. The processor of the inspecting device may be configured to receive an inspection signal sensed by the sensing part of the inspecting device to collect inspection data.

The processor 131P may be connected to the sensing part 130S in a wired or wireless manner.

The first controller 141 may be in operative communication with the first and second rotary encoders 121 and 123, the measuring device 130, and additional measuring devices and inspecting devices through a wired or wireless data network. The data network may be unidirectional or bidirectional.

The first and second rotary encoders 121 and 123, the measuring device 131, and additional measuring devices and inspecting devices may be configured to collect data from equipment, a workpiece, an intermediate product, and a product in the battery manufacturing apparatus 100 or to generate a signal for collecting data therefrom. The first controller 141 may be configured to transmit the coordinate data CD to the processor 131P.

The processor 131P may be configured to generate coordinate-related measurement data CMD based on the coordinate data CD and the measurement data. Similarly, the processor of the inspecting device may generate coordinate related inspection data based on the coordinate data and the inspection data. In general, the measurement data may be processed based on a trigger point. Examples of the processing of the measurement data may include storing the measurement data, manipulating the measurement data (e.g., generating the coordinate-related measurement data CMD and compressed measurement data PMD), and transmitting the measurement data.

As a non-limiting example, a trigger point for processing the measurement data may be the completion of scanning. For example, the sensing part 131S may scan the electrode sheet ES in the transverse direction TD, and the measurement data may be stored, processed, manipulated, and transmitted whenever scanning is performed.

The electrode sheet ES may be divided into a plurality of sections S1, S2, S3, S4, S5, and S6, based on scanning by the sensing part 131S of the measuring device 131. Each of the plurality of sections S1, S2, S3, S4, S5 and S6 may correspond to one of scans performed by the sensing part 131. In FIG. 2, dashed lines represent imaginary boundaries between the plurality of sections S1, S2, S3, S4, S5, and S6.

According to embodiments, the measuring device and/or inspecting device 131 may be configured to calibrate coordinate data CD, based on the position thereof. More specifically, the measuring device and/or inspecting device 131 may be configured to calibrate the coordinate data CD based on an offset length OL so as to relate the coordinates of the coordinate data CD to measured values of measurement data and/or inspection values of inspection data.

A process of collecting measurement data, relating the measurement data to coordinate data, calibrating the coordinate data related to the measurement data, and generating a roll map including the coordinate data and the measurement data will now be described with respect to the measuring device 131. However, the following description is also applicable in the same way or a similar way to a process of collecting inspection data, relating the inspection data to coordinate data, calibrating the coordinate data related to the inspection data, and generating a roll map including the coordinate data and the inspection data.

The measuring device 131 may collect measurement data of a part of the electrode sheet ES corresponding to (e.g., overlapping) the sensing part 131S, and the coordinate data CD may be collected by the second encoder 123 spaced apart from the sensing part 131S as described above. Accordingly, a part of the electrode sheet ES corresponding to the coordinate data CD and a part of the electrode sheet ES corresponding to the measurement data, which are collected at the same point in time, may be different from each other.

According to embodiments, the coordinate-related measurement data CMD may be provided by calibrating the coordinate data CD, which is collected at the same point in time as the measurement data, based on the offset length OL, and relating the calibrated coordinate data CD with the measurement data. The coordinate-related measurement data CMD may include measured values, a time value matching the measured values, a start coordinate, and an end coordinate. The start coordinate and the end coordinate may indicate a start point and an end point of the part of the electrode sheet ES from which the measurement data is collected. The start coordinate and the end coordinate may be determined based on the calibrated coordinate data CD. The coordinate-related measurement data CMD may include a measuring device ID identifying the measuring device 131 and an equipment ID identifying the secondary battery manufacturing apparatus 100.

A start coordinate of the section S1 is X1, and an end coordinate thereof is X2. A start coordinate of the section S2 is X2, and an end coordinate thereof is X3. A start coordinate of the section S3 is X3, and an end coordinate thereof is X4. A start coordinate of the section S4 is X4, and an end coordinate thereof is X5. A start coordinate of the section S5 is X5, and an end coordinate thereof is X6. A start coordinate of the section S6 is X6, and an end coordinate thereof is X7.

As another example, the sensing part 131S may be directly connected to a position measuring device such as the first and second rotary encoders 121 and 123 or be configured to sense datum points on the electrode sheet ES. In this case, the processor 131P may be configured to collect the coordinate-related measurement data CMD, based on the measurement signal MS transmitted from the sensing part 131S.

A plurality of guide rolls may be interposed between the sensing part 131S and the rewinder 113 to define a moving path of the electrode sheet ES. Accordingly, the offset length OL may be defined as a length of the electrode sheet ES between the rewinder 113 and a part (or position) of the electrode sheet ES sensed by the sensing part 131S (see FIG. 1). However, unlike the embodiment of FIG. 1, position data may be determined based on the unwinder 111 or a position measuring device installed at a side of the unwinder 111. In this case, the offset length OL may be defined as a length of the electrode sheet ES between the unwinder 111 and a part (or position) of the electrode sheet ES sensed by the sensing part 131S.

The offset length OL may be equal to or greater than a straight-line distance between the sensing part 131S and the rewinder 113 (or the unwinder 111).

The processor 131P may be configured to generate the compressed measurement data PMD, based on the measurement data and the coordinate data CD. The compressed measurement data PMD may include a representative value of the measurement data of each of the plurality of sections S1, S2, S3, S4, S5, and S6 of the electrode sheet ES, a judgement value, and a start coordinate and end coordinate of each of the plurality of sections S1, S2, S3, S4, S5, and S6 of the electrode sheet ES. The compressed measurement data PMD may further include a timestamp indicating a date and time when the measurement data of each of the plurality of sections S1, S2, S3, S4, S5, and S6 is collected, the measuring device ID, and the equipment ID.

The processor 131P may be configured to calculate the representative value of the measurement data of each of the plurality of sections S1, S2, S3, S4, S5, and S6 of the electrode sheet ES. The representative value of the measurement data of each of the plurality of sections S1, S2, S3, S4, S5, and S6 of the electrode sheet ES may include at least one of an average, a standard deviation, a median value, a maximum value, and a minimum value of the measurement data of each of the plurality of sections S1, S2, S3, S4, S5, and S6.

The size of the compressed measurement data PMD may be less than the size of the coordinate-related measurement data CMD.

A server 220, which will be described below, performs various tasks for managing the production of a secondary battery, in addition to generating a roll map. According to embodiments, a roll map is generated based on the compressed measurement data PMD instead of coordinate-related measurement data of a size substantially the same as that of raw measurement data, thus reducing resources of the server 220 to be allocated to generate and store the roll map. Accordingly, continuous manufacturing management may be provided from the server 220, and the reliability in the manufacture of a secondary battery may be improved.

The start coordinate and the end coordinate of each of the plurality of sections S1, S2, S3, S4, S5, and S6 of the electrode sheet ES may be determined based on coordinate data CD of each of the plurality of sections S1, S2, S3, S4, S5, and S6. A start coordinate and end coordinate of the compressed measurement data PMD are substantially the same as the start coordinate and end coordinate of the corresponding compressed measurement data CMD.

By processing the measurement data by a set method, a judgement value for the plurality of sections S1, S2, S3, S4, S5, and S6 of the electrode sheet ES may be determined. When an amount of the measured coating material on the electrode sheet ES (e.g., a loading amount of the coating material on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading amount of the coating material on the electrode sheet ES or the thickness of the electrode sheet ES) is less than the lower limit or greater than the upper limit.

The processor 131P may be configured to transmit the compressed measurement data PMD to the first controller 141. The processor 131P may be configured to transmit the coordinate-related measurement data CMD to the roll map generator 200 (more specifically, a server 230 of the roll map generator 200). The coordinate-related measurement data CMD may be transmitted to the server 230 through the server 210 but embodiments are not limited thereto. The coordinate-related measurement data CMD may be directly transmitted from the processor131P to the server 230.

The first controller 141 may be configured to transmit the compressed measurement data PMD to the second controller 143. The second controller 143 may be configured to transmit the compressed measurement data PMD to the roll map generator 200. However, embodiments are not limited thereto, and the first controller 141 may directly transmit the compressed measurement data PMD to the roll map generator 200.

The second controller 143 may be configured to control operations of the unwinder 111, the rewinder 113, and the processing device 115. The second controller 143 may be configured to generate a signal for operating or stopping the unwinder 111, the rewinder 113, and the processing device 115. The signal for operating or stopping the unwinder 111, the rewinder 113, and the processing device 115 may be generated based on electrode specification data ESD, the compressed measurement data PMD, an additional inspection signal, and an additional measurement signal.

The first controller 141 and the second controller 143 may be referred to together as a controller 140 or an integrated controller. The controller 140 may be configured to perform the functions of the first controller 141 and the second controller 143 of FIG. 1. Accordingly, the controller 140 may be configured to generate the coordinate data CD based on the unwinding amount signal UWAS or the winding amount signal WAS, transmit the coordinate data CD to the processor 131P of the measuring device 131, receive the coordinate-related measurement data CMD and the compressed measurement data PMD from the processor 131P, and transmit the coordinate-related measurement data CMD and the compressed measurement data PMD to the first server 220 through the server 210. The controller 140 may be configured to generate a signal for controlling the unwinder 111, the rewinder 113, and the processing device 115.

The roll map generator 200 may include the servers 210, 220, 230, 240, and 250. The servers 210, 220, 230, 240, and 250 may be separate entities that perform various functions, including generating a roll map and an intermediate roll map, storing the roll map and the intermediate roll map, or relaying communication between the servers 210, 220, 230, 240, and 250. Unlike that shown in FIG. 1, some of the servers 210, 220, 230, 240, and 250 may be integrated. For example, the server 220 and the server 230 may be integrated, the server 220 and the server 240 may be integrated, or the servers 220, 240, and 250 may be integrated.

The roll map generator 200 may be configured to generate a roll map including data about the electrode sheet ES. The roll map may represent the electrode sheet ES based on coordinates indicating positions on the electrode sheet ES. As described above, a secondary battery manufacturing process may be performed on the electrode sheet ES. The roll map may include data that represents a history of processes performed on the electrode sheet ES and relates to coordinates. Accordingly, the roll map enables feedback, feedforward, and tracking of the secondary battery manufacturing process.

The roll map may include event data indicating events of a roll-to-roll process of the electrode sheet ES. Generally, the event data is generated according to the progress of a process and thus is time series data. Accordingly, data of process events may include values indicating the events and a time value matched thereto. The time series data may be temporally ordered.

Roll maps may be generated in units of lots. The electrode sheet ES may be wound into the second electrode roll ER2, and the second electrode roll ER2 may be cut and separated from the electrode sheet ES connected to the first electrode roll ER1 after a target amount of winding is reached. A lot is a production unit of the roll-to-roll process, and the second electrode roll ER2 separated from the electrode sheet ES is an example of the lot. Accordingly, the server 220 may be configured to store a roll map of a previous process. The roll map of the previous process may correspond to the first electrode roll ER1. In addition, the server 220 may be configured to generate and store a roll map of a current process. The roll map of the current process may correspond to the second electrode roll ER2.

For example, a battery cell may include a cell ID formed on an electrode assembly or case. The cell ID may include lot numbers and coordinate information of electrodes and a separator included in the battery cell. The cell ID may be related to a roll map of the electrodes and the separator included in the battery cell. Accordingly, when an event such as a quality issue occurs in the battery cell after shipped, the history of collective data about the manufacture of the battery cell may be retrieved based on the cell ID.

The compressed measurement data PMD may be transmitted to the server 220 via the server 210. The server 210 may be a communication server. The server 210 may be a program for communication between the second controller 143 of manufacturing equipment and the server 220 for manufacturing management.

The electrode specification data ESD may include model information and a recipe of the electrode sheet ES. The electrode specification data ESD may include all matters related to the processing of the electrode sheet ES, such as process conditions, including the number of lots to be processed in a current process, the number of coated lanes to be formed on the electrode sheet ES, temperature, humidity, pressure, etc., and process parameters, including a moving speed of the electrode sheet ES, a discharge rate of a coating die, pressure of pressure rolls, etc.

For control of a process, a communication line may be installed between the second controller 143 and the server 220 to connect the second controller 143 and the server 220 via the server 210. Accordingly, data transmission through the second controller 143 may reduce resources required for the installation of the communication line and ensure efficient data processing and management, compared to a case in which the first and second rotary encoders 121 and 123 and the measuring device 131 directly transmit the unwinding amount signal UWAS, the winding amount signal WAS, and the measurement signal MS to the server 220 and a case in which the first controller 141 directly transmits the compressed measurement data PMD to the server 220.

The server 220 may be configured to generate a roll map. The roll map may include data about specifications of a lot. The specifications of the lot may include, for example, a lot number, a length of the wound electrode sheet ES, a width of the electrode sheet ES, and materials and a composition used to process the electrode sheet ES

According to embodiments, the server 220 may be a data processing system that supports all activities required to manage the manufacture of a secondary battery, such as work schedule management, work instructions, quality control, and work performance tally. The server 220 may be, for example, a manufacturing execution system (MES).

The server 230 may be configured to store the coordinate-related measurement data CMD. The server 230 may be configured to transmit the coordinate-related measurement data CMD to the server 240 in response to a request from the server 240.

The server 240 may be configured to store and process inspection data of the electrode sheet ES. The server 240 may manage the quality of processing the electrode sheet ES by continuously monitoring the processing of the electrode sheet ES based on the inspection data. According to embodiments, the server 240 may be a statical process controller (SPC).

The server 250 may be configured to store data of the servers 220, 230, and 240. The server 250 may be configured to store the coordinate-related measurement data CMD and the compressed measurement data PMD. When the server 220 is an MES and the server 240 is an SPC, they may be unsuitable to store the coordinate-related measurement data CMD and the compressed measurement data PMD for a long time. The server 250 may be a data warehouse.

The processor 131P and the servers 210, 220, 230, 240, and 250 may be implemented by hardware, firmware, software, or a combination thereof.

The server 220 stores and processes a large amount of data about general manufacturing management in addition to the roll map, and thus, the roll map stored in the server 220 may include simplified compressed measurement data PMD instead of the coordinate-related measurement data CMD including the raw measurement data. The server 220 may provide the roll map in response to a request from the user device 300. The user device 300 may display a visualized roll map VRM as shown in FIG. 3. The user device 300 may be a device, e.g., a mobile device, such as a workstation computer, a laptop computer, a desktop computer, a tablet PC, or a smart phone, or a wearable device, for communication with the roll map generator 200. The user device 300 may be configured to generate a request R1 to load a roll map or a request R2 to load an intermediate roll map. The user device 300 may be configured to transmit the requests R1 and R2 to the roll map generator 200. The user device 300 may include input tools to input the requests R1 and R2, and a display device to display the visualized roll map VRM. The server 220 and the server 240 may be configured to receive the coordinate-related measurement data CMD and the compressed measurement data PMD, generate a roll map and an intermediate roll map, and transmit data D1 of the roll map and data D2 of the intermediate roll map to the user device 300.

The visualized roll map VRM may include a plurality of visualization sections VS1, VS2, VS3, VS4, VS5 and VS6 corresponding to the plurality of sections S1, S2, S3, S4, S5 and S6 of the electrode sheet ES. Each of the plurality of visualization sections VS1, VS2, VS3, VS4, VS5, and VS6 may include a start coordinate, an end coordinate, and color.

A representative value of coordinate-related measurement data CMD of the visualization sections VS1, VS2, VS4, and VS6 may be displayed in color C1, a representative value of coordinate-related measurement data CMD of the visualization section VS3 may be displayed in color C2, and a representative value of coordinate-related measurement data CMD of the visualization section VS5 may be displayed in color C3.

Color C1 may indicate that the representative value of the visualization sections VS1, VS2, VS4, and VS6 is normal, color C2 may indicate that the representative value of the visualization section VS3 is excessive, and color C3 may indicate that the representative value of the visualization section VS3 is significantly excessive. Color C4 may indicate that the representative value is insufficient, and color C5 may indicate that the representative value is significantly insufficient.

Here, the visualized roll map VRM showing only one type of coordinate-related measurement data CMD is illustrated for convenience of description, but the roll map may further include additional data such as inspection data generated by an inspector, equipment data, and data of process parameters. Such additional data may be related to coordinates, and a way in which the additional data is related to the coordinates may be different from that of the coordinate-related measurement data CMD. For example, pinch hole defect data, which is a one of the inspection data, may be matched to a single coordinate representing a position of a pinch hole rather than a start coordinate and an end coordinate.

The intermediate roll map may be provided by relating the coordinate-related measurement data CMD, including the raw measurement data, to the roll map. The intermediate roll map may provide information about the raw measurement data to provide statistical production management, in addition to the roll map that provides information about defects and production performance based on the defects.

The servers 210, 220, 230, 240, and 250 may include physical servers or cloud servers.

According to some embodiments, the operations of the processor 131P and the servers 210, 220, 230, 240, and 250 may be implemented as instructions stored in a machine-readable medium that is readable and executable by one or more processors.

FIGS. 4 and 5 illustrate changes in a length of an electrode sheet in a buffer section.

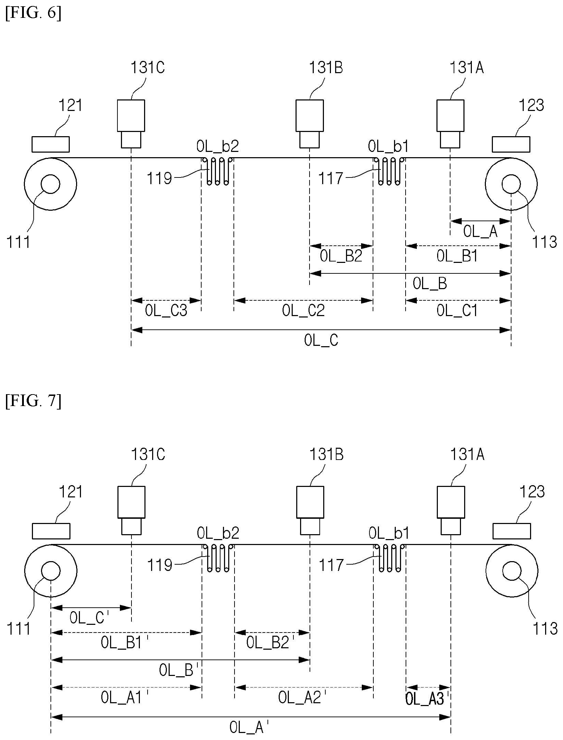

FIGS. 6 and 7 illustrate an example of an offset length with respect to an unwinder or a rewinder.

As described above, the inspecting device or measuring device 131 may calibrate coordinate data CD, which is position data, based on an offset length OL. The offset length OL is a length of the electrode sheet ES between a position of the electrode sheet ES sensed by the sensing part 131S and either an unwinder or a rewinder. That is, the offset length OL may be a length of the electrode sheet ES between a position on the electrode sheet ES, which is sensed by the sensing part 131S and from which inspection data or measurement data is collected, and either the unwinder or the rewinder.

When the offset length OL is constant, coordinate data of the electrode sheet collected based on a sensing signal of a rotary encoder installed at a side of the unwinder or rewinder at a point in time when inspection data or measurement data is collected may be calibrated by subtracting or adding the offset length OL from or to the coordinate data. Accordingly, the inspection data or measurement data may be accurately matched to the coordinate data of the electrode sheet from which the inspection data or measurement data is obtained.

However, when the offset length is not constant and changes, the coordinate data cannot be accurately calibrated.

For example, as shown in FIGS. 1, 4, and 5, the offset length may not be constant and may change, when there are buffer sections 117 and 119 in which a length of the electrode sheet changes according to tension of the electrode sheet ES moving between the unwinder 111 and the rewinder 113. In this case, the coordinate data does not match coordinate data of a real electrode sheet when the coordinate data is calibrated by simply regarding as an offset length a distance (e.g., a straight line distance) between the unwinder or rewinder and a position on the electrode sheet at which inspection data and measurement data are collected without taking into account a change in the offset length. As described above, when a roll map is generated based on data that does not match the position and state of the real electrode sheet, the reliability of data of the roll map decreases. As described above, when an electrode manufacturing process or a subsequent assembly process is managed using a low reliable roll map, defective products may occur and product production efficiency may decrease greatly.

Therefore, when the offset length changes, it is necessary to correct position data of the electrode sheet by reflecting the change in the offset length. When the electrode sheet includes a buffer section, the offset length may include a fixed length and a variable length as shown in FIGS. 6 and 7.

The fixed length is a length excluding the variable length from the offset length. However, when there is no buffer section between the inspecting device or measuring device and the unwinder or rewinder, an offset length of the inspecting device or measuring device includes only the fixed length.

The variable length is a length of the electrode sheet passing through the buffer section. The buffer section may include, for example, a plurality of fixed guide rollers FR and a movable guide roller MR as shown in FIGS. 4 and 5. The electrode sheet may be guided by the fixed guide rollers FR and the movable guide roller MR. The guide rollers are rollers that guide the electrode sheet to change a direction of the electrode sheet so as to increase or reduce a driving path of the electrode sheet. The movable guide roller MR may be installed on, for example, a movable frame (not shown) to be movable up or down as the movable frame mores up or down. Alternatively, the movable guide roller MR may be moved up or down by installing another lift mechanism.

The movable guide roller MR is moved up or down to adjust the tension of the electrode sheet and thus a length of the electrode sheet moving between the fixed guide rollers FR and the movable guide roller MR is variable. The buffer section may be provided to prevent damage to the electrode sheet by adjusting the tension of the electrode sheet or to control a moving speed of the electrode sheet according to the progress of an operation performed on the electrode sheet in a roll-to-roll manner.

An up/down movement of the movable frame or the lift mechanism may be performed by the controller 140. Alternatively, the controller 140 may sense a change in height according to the up/down movement of the movable frame or the lift mechanism.

In this case, a length of the electrode sheet passing through the buffer section may include a function of a distance (height) between the fixed guide rollers FR and the movable guide roller MR.

For example, when four fixed guide rollers FR are installed at the top and three movable guide rollers MR are installed at the bottom as shown in FIGS. 4 and 5, the electrode sheet in the buffer section includes a portion r1 wound around the fixed guide rollers FR, a portion R1 wound around the movable guide roller MR, and a length (height) H between the fixed guide rollers FR) and the movable guide roller MR.

Because r1 and R1 do not change, the variable length eventually depends on the height H. FIG. 4 illustrates a case in which the movable guide roller MR is located at the lowermost end and thus the height becomes a maximum Hmax. In this case, a maximum variable length may be expressed by the following equation:

$$\text{maximum variable length} = 2r1 + 5R1 + 6Hmax$$

FIG 5 illustrates a case in which the movable guide roller MR rises and the height becomes a minimum Hmin. In this case, a minimum variable length may be expressed by the following equation:

$$\text{minimum variable length} = 2r1 + 5R1 + 6Hmin$$

In an embodiment, the maximum variable length may be 6 m and the minimum variable length may be 1.5 m but embodiments are not limited thereto.

In FIG. 4, the fixed guide roller FR is disposed at the top and the movable guide roller MR is disposed at the bottom but the movable guide roller MR may be disposed at the top and the fixed guide roller FR may be disposed at the bottom.

The controller 140 may collect data about a variable length according to a change in the height. To this end, the battery manufacturing apparatus 100 may further include a sensor capable of sensing a change in height. The sensor may be a displacement sensor.

FIG. 6 illustrates an offset length of each measuring device (or inspecting device) with respect to a rewinder 113.

In FIG. 6, there is no buffer section between a measuring device 131A and the rewinder 113. In this case, an offset length OL_A of the measuring device 131A is a fixed length.

The buffer section 117 is present between a measuring device 131B and the rewinder 113. In this case, an offset length 0L_B of the measuring device 131B is as follows:

$$OL\_B = \text{fixed length}[OL\_B1 + OL\_B2] + \text{variable length}[OL\_b1]$$

Here, OL_B1 denotes a length of the electrode sheet between the buffer section 117 and the rewinder 113, and OL_B2 denotes a length of the electrode sheet between a portion of the electrode sheet sensed by the measuring device 131B and the buffer section 117. OL_b1 denotes a length of the electrode sheet passing through the buffer section 117.

The two buffer sections 117 and 119 are present between a measuring device 131C and the rewinder 113. In this case, an offset length OL_C of the measuring device 131C is as follows:

$$OL\_C = \text{fixed length}[OL\_C1 + OL\_C2 + OL\_C3] + \text{variable length}[OL\_b1 + OL\_b2]$$

Here, OL_C1 denotes a length of the electrode sheet between the buffer section 117 and the rewinder 113, OL_C2 denotes a length of the electrode sheet between the buffer section 117 and the buffer section 119, and OL_C3 denotes a length of the electrode sheet between a portion of the electrode sheet sensed by the measuring device 131C and the buffer section 119. OL_b2 denotes a length of the electrode sheet passing through the buffer section 119.

At a point in time when the measuring device 131A collects measurement data, the difference between coordinate data of the electrode sheet collected based on a sensing signal from a second rotary encoder 123 installed in the rewinder 113 and a position on the electrode sheet at which the measurement data is actually collected is OL_A. Therefore, coordinate data related to the measurement data collected by the measuring device 131A should be calibrated by adding the fixed length of OL_A to the coordinate data of the electrode sheet collected based on the sensing signal from the second rotary encoder 123. In this case, the offset length OL_A does not include a variable length and thus sensed coordinate data may be calibrated by adding a preset offset length thereto.

At a point in time when the measuring device 131B obtains measurement data, the difference between coordinate data of the electrode sheet collected based on a sensing signal from the second rotary encoder 123 installed in the rewinder 113 and a position on the electrode sheet at which the measurement data is actually collected is OL_B. Therefore, coordinate data related to the measurement data obtained by the measuring device 131B should be calibrated by adding OL_B to the coordinate data of the electrode sheet collected based on the sensing signal from the second rotary encoder 123.

The fixed length [OL_B1+OL_B2] of the offset length OL_B is preset.

The variable length [OL_b1] of the offset length OL_B may be obtained by the controller 140 as described above. That is, the controller 140 may obtain the variable length OL_b1 at the point in time at which the measurement data is obtained by the measurement device 131B.

Accordingly, the controller 140 may obtain accurate coordinate data related to the measurement data by reflecting the offset length OL_B of the measurement device 131B that is variable. Meanwhile, the calibration of the coordinate data may be performed by an inspecting device or measuring device. For example, the processor 131P of the measuring device may receive information about the variable length OL_b1 from the controller 140, calculate the total offset length OL_B of the measuring device 131B, and calibrate the coordinate data, based on the total offset length OL_B.

At a point in time when the measuring device 131C obtains measurement data, the difference between coordinate data of the electrode sheet collected based on a sensing signal from the second rotary encoder 123 installed in the rewinder 113 and a position on the electrode sheet at which the measurement data is actually collected is OL_C. Therefore, coordinate data related to the measurement data obtained by the measuring device 131C should be calibrated by adding OL_C to the coordinate data of the electrode sheet collected based on the sensing signal from the second rotary encoder 123.

The fixed length [OL_C1+OL_C2+OL_C3] of the offset length OL_C is preset and thus may be easily identified. The variable length [OL_b1+OL_b2] of the offset length OL_C may be obtained by the controller 140. That is, the controller 140 may obtain a variable length at a point in time when the measuring device 131C obtains measurement data.

Accordingly, the controller 140 may obtain accurate coordinate data related to the measurement data by reflecting the offset length OL_C of the measurement device 131C that is variable. The calibration of the coordinate data may be performed by an inspecting device or measuring device. For example, the processor 131P of the measuring device 131C may receive information about the variable length [OL_b1+OL_b2] from the controller 140, calculate the total offset length OL_C of the measuring device 131C, and calibrate the coordinate data based on OL_C.

FIG. 7 illustrates an offset length of each measuring device (or inspecting device) with respect to an unwinder 113.

In FIG. 7, there is no buffer section between the measuring device 131C and the unwinder 111. In this case, an offset length OL_C' of the measuring device 131C is a fixed length.

The buffer section 119 is present between a measuring device 131B and the rewinder 113. In this case, an offset length OL_B' of the measuring device 131B is as follows:

$$OL\_B' = \text{fixed length } [OL\_B1' + OL\_B2'] + \text{variable length } [OL\_b2]$$

Here, OL_B1' denotes a length of the electrode sheet between the buffer section 119 and the unwinder 111, and OL_B2' denotes a length of the electrode sheet between a portion of the electrode sheet sensed by the measuring device 131B and the buffer section 119. OL_b2 denotes a length of the electrode sheet passing through the buffer section 119.

The two buffer sections 117 and 119 are present between the measuring device 131A and the unwinder 111. In this case, an offset length OL_A' of the measuring device 131A is as follows:

$$OL\_A' = \text{fixed length } [OL\_A1' + OL\_A2' + OL\_A3'] + \text{variable length } [OL\_b2 + OL\_b1]$$

Here, OL_A1' denotes a length of the electrode sheet between the buffer section 119 and the unwinder 111, OL_A2' denotes a length of the electrode sheet between the buffer section 119 and the buffer section 117, and OL_A3' denotes a length of the electrode sheet between a portion of the electrode sheet sensed by the measuring device 131A and the buffer section 117. OL_b1 denotes a length of the electrode sheet passing through the buffer section 117.

At a point in time when the measuring device 131C collects measurement data, the difference between coordinate data of the electrode sheet collected based on a sensing signal from a first rotary encoder 121 installed in the unwinder 111 and a position on the electrode sheet at which the measurement data is actually collected is OL_C'. Therefore, coordinate data related to the measurement data collected by the measuring device 131C should be calibrated by subtracting the fixed length of OL_C' from the coordinate data of the electrode sheet collected based on the sensing signal from the first rotary encoder 121. In this case, the offset length OL_C' does not include a variable length and thus sensed coordinate data may be calibrated by subtracting a preset offset length therefrom.

At a point in time when the measuring device 131B obtains measurement data, the difference between coordinate data of the electrode sheet collected based on a sensing signal from the first rotary encoder 121 installed in the unwinder 111 and a position on the electrode sheet at which the measurement data is actually collected is OL_B'. Therefore, coordinate data related to the measurement data obtained by the measuring device 131B should be calibrated by adding OL_B' to the coordinate data of the electrode sheet collected based on the sensing signal from the first rotary encoder 121.

The fixed length [OL_B1'+OL_B2'] of the offset length OL_B' is preset.

The variable length [OL_b2] of the offset length OL_B' may be obtained by the controller 140 as described above. That is, the controller 140 may obtain the variable length OL_b2 at the point in time at which the measurement data is obtained by the measurement device 131B.

Accordingly, the controller 140 may obtain accurate coordinate data related to the measurement data by reflecting the offset length OL_B' of the measurement device 131B that is variable. The calibration of the coordinate data may be performed by an inspecting device or measuring device. For example, the processor 131P of the measuring device may receive information about the variable length OL_b2 from the controller 140, calculate the total offset length OL_B' of the measuring device 131B, and calibrate the coordinate data, based on the total offset length OL_B'.

At a point in time when the measuring device 131A obtains measurement data, the difference between coordinate data of the electrode sheet collected based on a sensing signal from the first rotary encoder 121 installed in the unwinder 111 and a position on the electrode sheet at which the measurement data is actually collected is OL_A'. Therefore, coordinate data related to the measurement data obtained by the measuring device 131A should be calibrated by subtracting OL_A' from the coordinate data of the electrode sheet collected based on the sensing signal from the first rotary encoder 121.

The fixed length [OL_A1'+OL_A2'+OL_A3'] of the offset length OL_A' is preset and thus may be easily obtained. The variable length [OL_b2+OL_b1] of the offset length OL_A' may be obtained by the controller 140. That is, the controller 140 may obtain a variable length at a point in time at which the measuring device 131A obtains measurement data.

Accordingly, the controller 140 may obtain accurate coordinate data related to the measurement data by reflecting the offset length OL_A' of the measurement device 131A that is variable. The calibration of the coordinate data may be performed by an inspecting device or measuring device.

The coordinate data calibrated by the measuring device and/or inspecting device or the controller may be related to the measurement data and/or the inspection data. The calibrated coordinate data and the measurement data and/or inspection data related thereto may be transmitted to a server or servers of the roll map generator 200 by the measurement data and/or inspection data or the controller.

For example, the server 220, the server 240, and the server 250 may generate a roll map or intermediate roll map including the calibrated coordinate data and the measurement data and/or inspection data related to the calibrated coordinate data. Accordingly, the reliability of roll map data may be further improved.

[Embodiments of the Invention]

(Second embodiment)

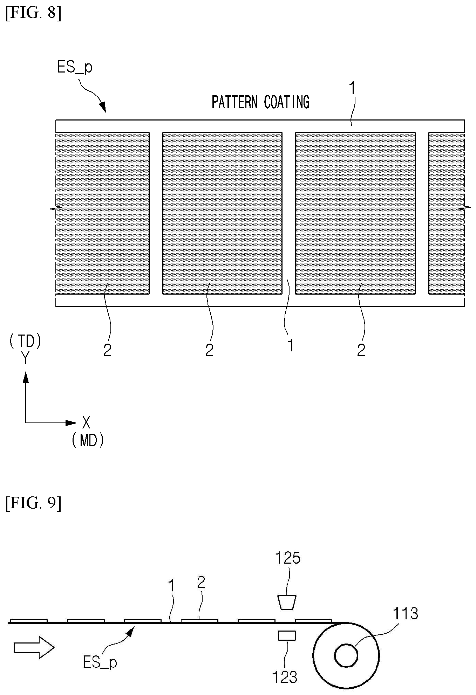

FIG. 8 is a schematic diagram of a pattern electrode.
FIG. 9 illustrates a battery manufacturing system in which a pattern counter and an encoder are installed together.

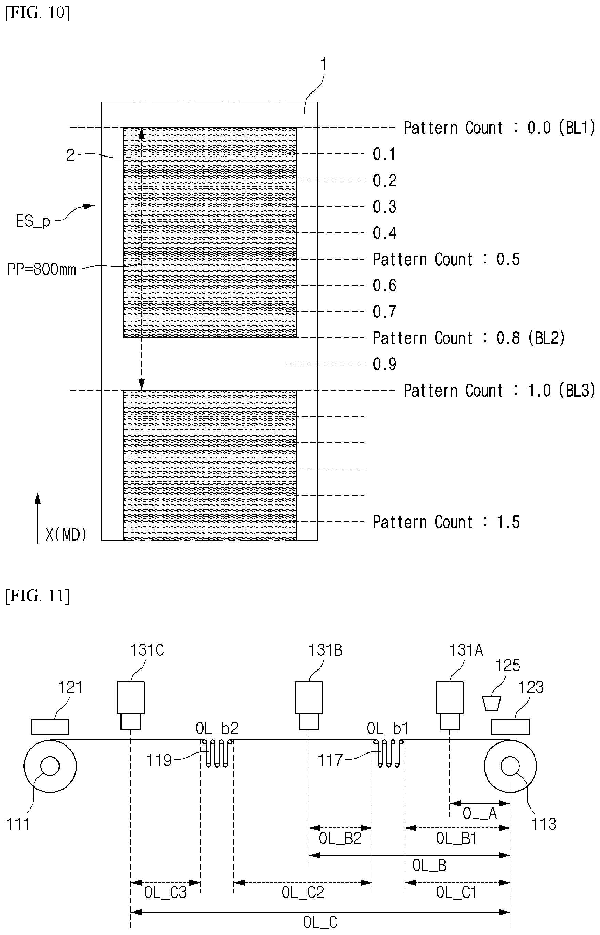

FIG. 10 is a schematic diagram illustrating a pattern indicator counted based on a pattern pitch of a pattern electrode.
FIG. 11 illustrates an offset length in a battery manufacturing system to which a pattern counter is applied.
A pattern electrode ES_p is an electrode in which an uncoated portion 1 and a coated portion 2 are repeatedly arranged along a longitudinal direction of an electrode sheet to form a pattern.
The pattern electrode may be slit in a width direction with respect to an uncoated portion 1 between coated portions 2 in a subsequent process. A slit coated portion 2 may be stacked together with a separator and an electrode coated portion of a different polarity to form an electrode assembly or may be wound together with the separator and the electrode coated portion of the different polarity to form a jelly roll-shaped electrode assembly.
In particular, the pattern electrode for use in a small battery may be slit not only in the width direction but also in the longitudinal direction of the pattern electrode to form a plurality of electrode lanes.
An electrode assembly is made according to a length and width of the coated portions 2 forming the pattern in the pattern electrode. Therefore, it is necessary to express a position on the pattern electrode in the form of pattern indicator data as shown in FIG. 10. That is, in the pattern electrode ES_p, pattern indicator data is important position data related to various measurement data and/or inspection data. Similar to the above-described coordinate data, the pattern indicator data may be related to measurement data and/or inspection data obtained from a portion of a pattern electrode sheet corresponding to the pattern indicator data.
A battery manufacturing apparatus and a battery manufacturing system as shown in FIG. 1 may also be applicable to the pattern electrode sheet. In this case, a pattern counter 125 configured to count a pattern indicator on the pattern electrode may be employed as a position measuring device (see FIG. 9).
The pattern counter 125 may be or include, for example, a photoelectric sensor. The photoelectric sensor includes a light-transmitting part and a light-receiving part. When light transmitted through the light-transmitting part is blocked by or reflected from an object to be detected, the amount of light reaching the light-transmitting part changes. The light-receiving part detects a change in the amount of light, converts the change into an electrical signal, and outputs an electrical signal. When the pattern counter 125 is or includes the photoelectric sensor, the amount of light transmitted through the light-transmitting part changes with respect to a boundary between the coated portion 2 and the uncoated portion 1 on the pattern electrode, when the light reaches the light-receiving part. Accordingly, the pattern counter 125 may count a pattern indicator by identifying the coated portion and the uncoated portion on the pattern electrode. Preferably, an optical fiber sensor may be used as the pattern counter 125. The optical fiber sensor employs an optical fiber instead of a lens of the photoelectric sensor, and has excellent environmental resistance such as noise resistance due to the absence of an electrical part in the optical fiber serving as a detector.
In the present embodiment, the pattern counter 125 may generate a signal for sensing a position of the pattern electrode sheet moving between the unwinder and the rewinder.
The controller 140 may collect pattern indicator data based on the sensing signal.
In addition, the measuring device and/or the inspecting device 131 may collect measurement data and/or inspection data of the pattern electrode sheet and relate the pattern indicator data to the measurement data and/or inspection data to generate pattern indicator data-related measurement data and/or inspection data.
The measuring device and/or inspecting device 131 or the controller 140 may correct the pattern indicator data of the pattern electrode sheet, based on a change in an offset length that is a length of the pattern electrode sheet between the unwinder or rewinder and a position (pattern indicator data) on the pattern electrode sheet at which the measurement data and/or inspection data is collected.
The pattern indicator data and the coordinate data may be used together to display position data of the pattern electrode. In this case, the pattern counter 125 and the rotary encoder 123 described above may be used together as position measuring devices.
Referring to FIG. 9, when the pattern electrode sheet is wound around the rewinder 113, a rotary encoder (the second rotary encoder: 123) and the pattern counter 125 are installed together at a side of the rewinder. Pattern indicator data at each position on the pattern electrode sheet that is moving may be obtained by the pattern counter 125. Alternativley, coordinate data of each position on the pattern electrode sheet that is moving may be obtained by the second rotary encoder 123 .

Meanwhile, pattern indicator data may be more exactly represented by the pattern counter 125 and the rotary encoder 123. For example, the pattern indicator data may be displayed in decimal places, based on a pattern pitch PP, which is a distance between one coated portion and a neighboring coated portion on the pattern electrode, and a signal generated by the rotary encoder 123.

Referring to FIG. 10, the pattern electrode sheet ES_p is moving in a longitudinal direction, i.e., a machine direction MD.

The pattern counter 125 may sense boundaries BL1, BL2, and BL3 between coated portions 2 and uncoated portions 1 of FIG. 10. In addition, the pattern counter 125 may be directly connected to the second rotary encoder 123 or connected to the controller 140 to obtain encoder values corresponding to the boundaries BL1, BL2, and BL3. In this case, when a pattern pitch is 800 mm, the pattern pitch may be divided into ten equal parts to display a pattern indicator (e.g., a pattern number) in decimal places. For example, when the pattern electrode sheet is moved by 80 mm and the pattern counter 125 receives an encoder value corresponding to 80 mm, the pattern counter 125 may count a pattern number of 0.1. Until the pattern electrode sheet is moved by 800 mm and the pattern counter 125 senses a boundary BL3 of a neighboring coated portion, the pattern counter 125 or the controller 140 connected thereto may count a pattern number from 0.1 to 1.0 in connection with the encoder value. As described above, the pattern counter 125 is related to the second rotary encoder 123 and thus a pattern count number may be displayed in more detail. In addition, the pattern counter 125 or the controller 140 may count a pattern number in comparison with a set pattern pitch PP (a length of one coated portion+a length of one uncoated portion) and thus a coated portion or uncoated portion of a defective pattern may be identified. That is, in comparison with the pattern pitch PP, the coated portion 2 is insufficient or excessive in length and thus may be defective when, for example, the boundary BL2 is less than or greater than 0.8. When a length of an uncoated portion between the boundaries BL2 and BL3 is less than or greater than a set length, a portion of the pattern electrode corresponding to the uncoated portion may be defective.

Referring to FIGS. 1 and 11, a pattern electrode sheet may also include buffer sections 117 and 119.

In this case, when the length of the pattern electrode sheet ES_p changes in the buffer sections 117 and 119 due to the tension of the pattern electrode sheet ES_p, the number of patterns (the number of coated portions) on the pattern electrode sheet passing through the buffer sections 117 and 119 also changes. Therefore, it is necessary to calibrate position data of the pattern electrode sheet ES_p (pattern indicator data in this case) on the basis of a variable offset length, similar to a general electrode.

FIG. 11 illustrates an example in which pattern electrode data is corrected with respect to a rewinder 113.

In the system of FIG. 11, a second rotary encoder 123 is provided at a side of the rewinder 113. Therefore, as described above, pieces of coordinate data collected based on a sensing signal from the second rotary encoder 123 installed at the side of the rewinder 113 at points in times when measuring devices 131C, 131B, and 131A may be calibrated by adding offset lengths OL_A, OL_B, and OL_C of measuring devices thereto.

The system of FIG. 11 further includes a pattern counter 125 at a side of the rewinder 113. In this case, position data may be expressed in the form of pattern indicator data rather than coordinate data.

In FIG. 11, there is no buffer section between the measuring device 131A and the rewinder 113. In this case, an offset length OL_A of the measuring device 131A is a fixed length.

The buffer section 117 is present between the measuring device 131B and the rewinder 113. In this case, an offset length OL_B of the measuring device 131B is as follows:

$$OL\_B = fixed\ length[OL\_B1 + OL\_B2] + variable\ length[OL\_b1]$$

Here, OL_B1 denotes a length of the pattern electrode sheet between the buffer section 117 and the rewinder 113, and OL_B2 denotes a length of the electrode sheet between a portion of the pattern electrode sheet sensed by the measuring device 131B and the buffer section 117. OL_b1 denotes a length of the pattern electrode sheet passing through the buffer section 117.

The two buffer sections 117 and 119 are present between the measuring device 131C and the rewinder 113. In this case, an offset length OL_C of the measuring device 131C is as follows:

$$OL\_C = fixed\ length[OL\_C1 + OL\_C2 + OL\_C3] + variable\ length[OL\_b1 + OL\_b2]$$

Here, OL_C1 denotes a length of the pattern electrode sheet between the buffer section 117 and the rewinder 113, OL_C2 denotes a length of the pattern electrode sheet between the buffer section 117 and the buffer section 119, and OL_C3 denotes a length of the pattern electrode sheet between a portion of the pattern electrode sheet sensed by the measuring device 131C and the buffer section 119. OL_b2 denotes a length of the pattern electrode sheet passing through the buffer section 119.

The pattern indicator data related to the measurement data of the measuring device 131A should be corrected by adding pattern indicator data corresponding to the fixed length OL_A to pattern indicator data of the pattern electrode sheet collected based on a sensing signal from the pattern counter 125. In this case, the offset length OL_A does not include a variable length and thus sensed pattern indicator data may be corrected by adding a preset offset length thereto.

At a point in time when the measuring device 131B obtains measurement data, the difference between pattern indicator data collected based on the sensing signal from the pattern counter 125 and a position on the pattern electrode sheet at which the measurement data is actually collected is OL_B. Thus, the pattern indicator data related to the measurement data of the measuring device 131B should be corrected by adding pattern indicator data corresponding to OL_B to the pattern indicator data of the pattern electrode sheet collected based on the sensing signal from the pattern counter 125.

The fixed length [OL_B1+OL_B2] of the offset length OL_B is preset.

The variable length [OL_b1] of the offset length OL_B may be obtained by the controller 140 as described above. That is, the controller 140 may obtain the variable length OL_b1 at the point in time when the measurement data is obtained by the measurement device 131B.

Accordingly, the controller 140 may obtain accurate pattern indicator data related to the measurement data by reflecting the offset length OL_B of the measurement device 131B that is variable. Meanwhile, the correction of the pattern indicator data may be performed by an inspecting device or measuring device. For example, the processor 131P of the measuring device may receive information about the variable length OL_b1 from the controller 140, calculate the total offset length OL_B of the measuring device 131B, and correct the pattern indicator data, based on the total offset length OL_B.

At a point in time when the measuring device 131C obtains measurement data, the difference between pattern indicator data collected based on a sensing signal from the pattern counter 125 and a position on the pattern electrode sheet at which the measurement data is actually collected is OL_C. Thus, the pattern indicator data related to the measurement data of the measuring device 131C should be corrected by adding pattern indicator data corresponding to OL_C to the pattern indicator data of the pattern electrode sheet collected based on the sensing signal from the pattern counter 125.

The fixed length [OL_C1+OL_C2+OL_C3] of the offset length OL_C is preset and thus may be easily identified. The variable length [OL_b1+OL_b2] of the offset length OL_C may be obtained by the controller 140. That is, the controller 140 may obtain a variable length at a point in time when the measuring device 131C obtains measurement data.

Accordingly, the controller 140 may obtain accurate pattern indicator data related to the measurement data by reflecting the offset length OL_C of the measurement device 131C that is variable. The above-described correction of the pattern indicator data may be performed by an inspecting device or measuring device. For example, the processor 131P of the measuring device 131C may receive pattern indicator data corresponding to the variable length [OL_b1+OL_b2] from the controller 140, calculate the total offset length OL_C of the measuring device 131C, and correct the pattern indicator data based on the total offset length OL_C.

The servers of the roll map generator 200 of FIG. 1 may generate a roll map including the corrected pattern indicator data and measurement data and/or inspection data related to the corrected pattern indicator data.


(Third Embodiment)

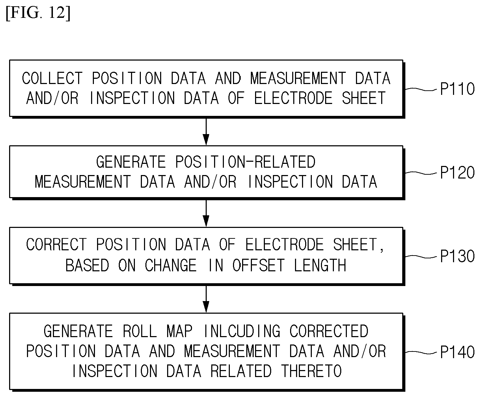

FIG. 12 is a flowchart of a battery manufacturing method according to embodiments.

Referring to FIGS. 1 and 11, in P110, position data (coordinate data CD and/or pattern indicator data) and measurement data and/or inspection data may be collected. The position data indicates a position of an electrode sheet or pattern electrode sheet moving between an unwinder and a rewinder.

The position data may be either coordinate data including coordinates indicating positions on the electrode sheet or pattern indicator data on a pattern electrode on which a coated portion and an uncoated portion are repeated along a longitudinal direction of the pattern electrode sheet.

The coordinate data may be collected based on at least one of an unwinding amount signal or a winding amount signal of the electrode sheet generated by an encoder.

The pattern indicator data may be calculated based on a pattern pitch and a signal generated by the encoder (see FIG. 10).

The position data may be collected by the first controller 141. As described above, the inspection data or measurement data may be collected by the inspecting device or the measuring device 130.

Next, in P120, position-related measurement data CMD, compressed measurement data PMD, or inspection data may be generated. The position-related measurement data CMD and the compressed measurement data PMD may be generated by the processor 131P of the measuring device 131 as described above.

Next, in P130, the position-related measurement data and/or the inspection data is corrected based on a change in an offset length. When the position-related measurement data and/or the inspection data are corrected, position data of the electrode sheet collected based on a sensing signal from a position measuring device (e.g., a rotary encoder or pattern counter) installed at a side of the unwinder or rewinder at a point in time when the measurement data and/or inspection data is collected may be corrected by adding or subtracting the offset length to or from the position data. The correction of the position data may be performed by the measuring device and/or inspecting device or the controller 140.

Next, in P140, the corrected position data, and the inspection data, the position-related measurement data CMD, and the compressed measurement data PMD related to the corrected position data may be transmitted to the roll map generator 200. The servers of the roll map generator 200 may generate a roll map, based on the transmitted data. The roll map may be generated by one of the servers 230, 240, and 250. The roll map includes the corrected position data and the measurement data and/or inspection data related thereto and thus data reliability improves.

(Fourth Embodiment)

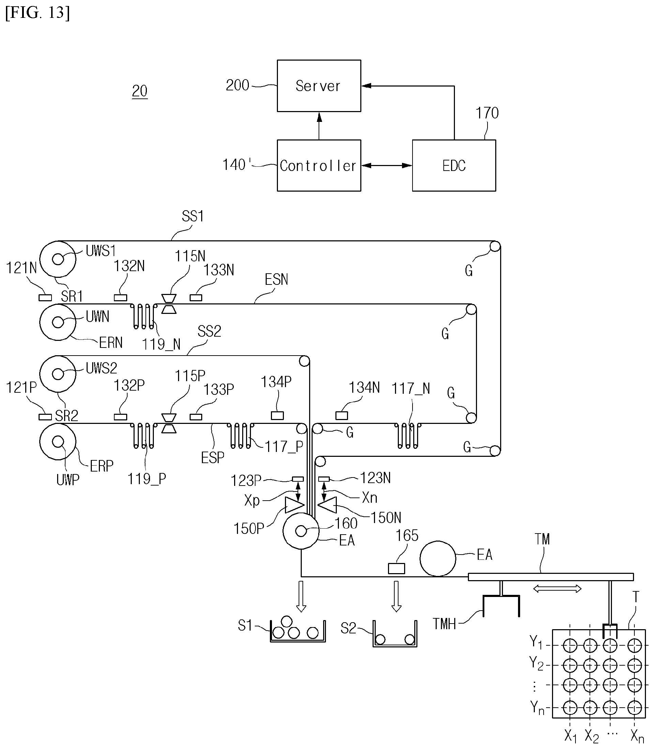

FIG. 13 illustrates a battery manufacturing system according to embodiments.

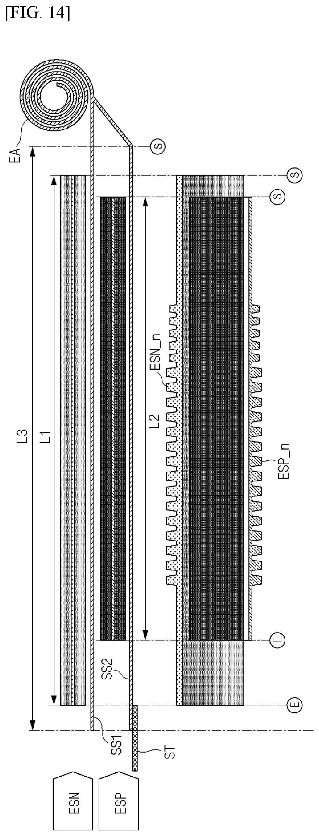

FIG. 14 is a schematic diagram illustrating an example in which an electrode and a separator are wound to a predetermined length by a winder.

In a battery manufacturing system 20 of the present embodiment, when a plurality of electrode sheets ESN and ESP are transferred in a roll-to-roll state and wound by a winder 160 to manufacture an electrode assembly EA, position data of the electrode sheets ESN and ESP is corrected based on a variable offset length of each of the electrode sheets ESN and ESP.

The present embodiment is slightly different from the above-described embodiment in terms of the definition of an offset length, because each electrode sheet is cut to a predetermined length and wound by the winder 160.

In this system, the offset length is a length of each electrode sheet between the unwinder or a cutter and a position on each electrode sheet at which measurement data and/or inspection data is collected. That is, with respect to the unwinder, the definition of the offset length is the same as that in the example of FIG. 1. However, unlike in FIG. 1, the offset length is determined with respect to the cutter rather than the rewinder.

Referring to FIG. 13, the battery manufacturing system 20 includes: position measuring devices 121N, 121P, 123N and 123P configured to generate a sensing signal for sensing a position of each of electrode sheets ESN and ESP moving between unwinders UWN and UWP and the winder 160; a controller 140' configured to collect position data of each of the electrode sheets ESN and ESP, based on the sensing signal; measuring devices 132N, 133N, 134N, 132P, 133P and 134P and/or an inspector configured to collect measurement data and/or inspection data of each of the moving electrode sheets ESN and ESP and to generate position-related measurement data and/or inspection data by relating the position data to the measurement data and/or inspection data; cutters 150N and 150P provided before the winder 160 to cut each of the electrode sheets ESN and ESP to a predetermined length; and the winder 160 configured to wind each of the cut electrode sheets ESN and ESP to manufacture an electrode assembly.

The negative electrode roll ERN may be loaded on the unwinder UWN. The unwinder UWN may be configured to unwind the negative electrode sheet ESN from a negative electrode roll ERN.

A positive electrode roll ERP may be loaded on the unwinder UWP. The unwinder UWP may be configured to unwind the positive electrode sheet ESP from the positive electrode roll ERP.

A separator roll SR1 may be loaded on an unwinder UWS1, and a separator roll SR2 may be loaded on an unwinder UWS2. The unwinders UWS1 and UWS2 may be configured to unwind separator sheets SS1 and SS2, respectively.

The negative electrode sheet ESN, the positive electrode sheet ESP, and the two separator sheets SS1 and SS2 may be guided by a guide roll G to be moved toward the cutters 150N and 150P and the winder 160.

A plurality of guide rolls G may be provided to correspond to moving paths of the sheets. The sheets guided by the guide rolls G may join in front of the cutters 150N and 150P.

The first rotary encoder 121N may be configured to sense an amount of the negative electrode sheet ESN unwound from the negative electrode roll ERN by the unwinder UWN. Thus, the first rotary encoder 121N may be configured to generate an unwinding amount (input amount) signal indicating a length of the negative electrode sheet ESN unwound by the unwinder UWN.

The second rotary encoder 123N is installed near the guide roll to which each sheet joins. The second rotary encoder 123N may be configured to generate a consumption amount signal of the negative electrode sheet ESN moved to the winder 160.

The first rotary encoder 121P may be configured to sense an amount of the positive electrode sheet ESP unwound from the positive electrode roll ERP by the unwinder UWP. Accordingly, the first rotary encoder 121P may be configured to generate an unwinding amount signal indicating a length of the positive electrode sheet ESP unwound by the unwinder UWP.

The second rotary encoder 123P is installed near the guide roll to which each sheet joins. The second rotary encoder 123P may be configured to sense an amount of the positive electrode sheet ESP moved to the winder 160.

**EP 4 760 839 A1**

Accordingly, the second rotary encoder 123P may be configured to generate a consumption amount signal of the positive electrode sheet ENP moved to the winder 160.

The position data may be coordinate data indicating a position of an electrode sheet moving between the unwinder and the winder. Alternatively, when the electrode sheet is a pattern electrode sheet and a pattern counter is used as a position measuring device, the position data may be pattern indicator data. That is, in the system of FIG. 13, coordinate data and/or pattern indicator data may be used as position data of each electrode sheet by employing devices similar to those of FIG. 9 for each electrode sheet.

According to an embodiment, the battery manufacturing system 20 of the present embodiment may include an additional position measuring device capable of sensing a position signal of each of the separator sheets SS1 and SS2.

The controller 140' may be configured to perform the functions of the first controller 141 and the second controller 143 of FIG. 1. Accordingly, the controller 140' may generate position data based on the unwinding amount signal or the consumption amount signal, and transmit the position data to processors of the measuring devices. In addition, the controller 140' may receive position-related measurement data CMD and/or inspection data from the processor and transmits the position-related measurement data CMD and/or inspection data to a roll map generator 200.

The controller 140' may be configured to generate a signal for controlling a plurality of unwinders, a plurality of rewinders, and notching devices.

The system 20 may additionally include notching devices 115N and 115P.

The negative electrode sheet ESN unwound from the negative electrode roll ERN is notched by the first notching device 115N before being wound. The positive electrode sheet ESP unwound from the positive electrode roll ERS is notched by the second notching device 115P before being wound.

A notching process is one of assembly processes and may be defined as a process of processing electrode sheets (a positive electrode sheet and a negative electrode sheet) to manufacture electrode tabs (a positive electrode tab and a negative electrode tab). When a jelly roll-type electrode assembly is manufactured by winding electrodes and separators, the notching process and a winding process may be performed in consecutive electrode transfer paths.

Referring to FIG. 14, the negative electrode sheet ESN is notched to form a notched portion ESN_n on an uncoated portion of the negative electrode sheet ESN. In addition, the positive electrode sheet ESP is notched to form a notched portion ESP_n on an uncoated portion of the positive electrode sheet ESP.

After notched, the negative electrode sheet is cut by a first winding length L1 and wound by the winder. The notched portion ESN_n of the negative electrode sheet is provided within the first winding length L1.

In addition, the positive electrode sheet is cut by a second winding length L2 and wound together with the negative electrode sheet by the winder. The notched portion ESP_n of the positive electrode sheet ESP is also provided within the second winding length L2.

The separator sheets SS1 and SS2 between the negative electrode sheet ESN and the positive electrode sheet ESP are wound by a third winding length L3. To secure electrical safety and insulation when the electrode assembly is made in the form of a jelly roll, the first to third winding lengths L1 to L3 may be determined to be different from one another. For example, a winding length (e.g., the third winding length L3) of a separator between a negative electrode sheet and a positive electrode sheet may be set to be greater than a winding length of another electrode sheet. Accordingly, when the separator of the third winding length L3 is wound into a cylindrical shape, the separator is on an outermost side of the jelly-roll electrode assembly in a radial direction, thus preventing an electrical short circuit from occurring due to direct contact between the negative electrode sheet and the positive electrode sheet.

Referring back to FIG. 13, the first and second notching devices 115N and 115P perform notching processing on each electrode sheet corresponding to each of these winding lengths. Notching specifications, such as a length of a notched portion formed to be less than or equal to a winding length, a size of an electrode tab, and a distance between electrode tabs, are predetermined according to the type and specifications of a battery. The first to third winding lengths are also predetermined according to the type or specifications of the battery. Information about the notching specifications and the winding lengths is stored in the controller 140' or a product production-related server (e.g., an MES) connected to the controller 140'. Accordingly, the controller 140' may perform notching on each electrode sheet according to set specifications by controlling the first notching device 115N and the second notching device 115P based on the above information.

Each electrode sheet on which notching is performed is inspected and/or measured by various types of measuring devices and/or inspecting devices and thereafter is cut into each of the winding lengths by the cutter 150N or 150P.

To collect measurement data and/or inspection data of the negative electrode sheet and the positive electrode sheet, at least one measuring device and/or inspecting device is provided between the negative electrode roll ERN and the winder 160. At least one measuring device and/or inspecting device is provided between the positive electrode roll ERP and the winder 160.

The inspecting device and/or measuring device may be provided for each electrode sheet.

For example, the datum point measuring device 132N may be provided to detect datum points before notching of the negative electrode sheet, the visual inspector 133N may be provided to inspect appearance after the notching of the negative electrode sheet, and the joint measuring device 134N may be provided to detect a position of a joint of the negative electrode sheet before joining the separator.

Similarly, the datum point measuring device 132P may be provided to detect datum points before notching of the positive electrode sheet, the visual inspector 133P may be provided to inspect appearance after the notching of the positive electrode sheet, and the joint measuring device 134P may be provided to detect a position of a joint of the positive electrode sheet before joining the separator.

The inspecting device or the measuring device may include a sensing part and a processor.

The sensing part may be configured to transmit an inspection signal and/or a measurement signal MS to the processor.

The processor may be configured to collect position-related inspection data and/or measurement data, based on the inspection signal and/or the measurement signal and position data (coordinate data and/or pattern indicator data). The processor may be configured to transmit the measurement data and/or inspection data to the servers of the roll map generator 200 through the controller 140'.

The cutters 150N and 150P are provided before the winder to cut each electrode sheet to a predetermined length (a predetermined winding length).

The negative electrode sheet ESN, the positive electrode sheet ESP, and the separator sheets SS1 and SS2 are guided by corresponding guide rolls to join at points before the first cutter 150N and the second cutter 150P.

The controller 140' may control the first cutter 150N to cut the negative electrode sheet ESN by the first winding length L1. In addition, the controller 140' may control the second cutter 150P to cut the positive electrode sheet ESP by the second winding length L2.

A portion of the negative electrode sheet ESN that is cut by the first winding length L1 is moved to the winder 160, together with the separator sheet SS1. A portion of the positive electrode sheet ESN that is cut by the second winding length L2 is moved to the winder 160, together with the separator sheet SS2. Each separator sheet may be moved to the winder 160 without being cut in advance to support the electrode sheets that are moving.

The winder 160 may be configured to wind the negative electrode sheet ESN, the separator sheet SS1, the positive electrode sheet ESP, and the separator sheet SS2 together. Accordingly, an electrode assembly EA of a battery (e.g., a cylindrical battery) may be provided. The separator sheets may be cut by a separator cutter (not shown) after wound.

The manufactured electrode assembly EA may be discharged to the outside. The discharged electrode assembly EA may be inspected by a separate inspector 165 and then transferred to a tray T by a transfer device TM. The electrode assembly EA when determined to be defective by the inspector 165 may be discharged and stored in a defective assembly storage port S2.

The electrode assembly EA when determined to be normal may be held by, for example, a gripper TMH of the transfer device TM and transferred to the tray T. The tray T includes a plurality of electrode assembly EA storage positions. Electrode assemblies EA may be stored at positions in the tray T sequentially, for example, in a transfer order or according to a loading algorithm. For example, when there are rows X1, X2, ..., Xn and columns Y1, Y2, ..., Yn in the tray T, positions on the tray T at which the electrode assemblies EA are loaded may be specified using an ordered pair of matrix represented by an intersection of the rows and the columns.

Meanwhile, the system 20 may include an identification information assignment device (e.g., an equipment data collection (EDC) server) 170 configured to assign identification information to the electrode assembly EA.

The identification information of the electrode assembly EA may be transmitted to the controller 140' and/or the roll map generator 200 to correspond to a roll map of electrode sheets included in the electrode assembly EA.

The system 20 may also include buffer sections 117N, 119N, 117P and 119P in which a length of each electrode sheet varies. For example, when a moving speed of the electrode sheet is maintained constant in the system, a buffer section may be set to provide a buffer function according to the tension of the electrode sheet or the progress of work.

When an offset length that is a length of each electrode sheet between a position on each electrode sheet at which measurement data and/or inspection data is collected and the unwinder or cutter changes, the plurality of measuring devices and/or inspecting devices or the controller 140' corrects position data of each electrode sheet, based on a change in the offset length.

In this case, when the position data is corrected with respect to the unwinder, the position data may be corrected by subtracting the offset length from position data of each electrode sheet collected based on a sensing signal from a position measuring device installed at a side of the unwinder. In this case, the offset length is a length of each electrode sheet between the position on each electrode sheet at which the measurement data and/or inspection data is collected and the unwinder and is the same as the offset length of FIG. 7.

Meanwhile, in the system 20, position data may be corrected with respect to the cutters 150N and 150P that determine the number of jelly-roll electrode assemblies EA.

Referring to FIG. 13, the electrode sheets ESN and ESP are respectively moved by a distance Xp and a distance Xn toward the cutters 150N and 150P from the second position measuring devices 123N and 123P installed at sides of the cutters 150N and 150P. Therefore, when the position data is corrected with respect to the cutters 150N and 150P, a value obtained by adding position data corresponding to the distances Xp and Xn to position data of each electrode sheet collected based on sensing signals from the second position measuring devices 123N and 123P installed at sides of the cutters 150N and 150P is the position data to be corrected.

In this case, the offset length is the length of each electrode sheet between the cutter 150N or 150P and the position on each electrode sheet at which measurement data and/or inspection data is collected. In this case, the position data to be corrected may be corrected by adding the offset length to position data to be finally corrected, which is calculated by adding the position data corresponding to the distance XP or Xn to the position data of each electrode sheet collected based on the sensing signal from the second position measuring device installed at the side of the cutter.

A principle of correcting position data of each electrode sheet based on a change in an offset length when the offset length changes is the same as that described above with reference to FIGS. 6 and 7, regardless of whether correction is made with respect to the unwinder or the cutter.

When the negative electrode sheet and the positive electrode sheet are pattern electrode sheets, position data thereof may be displayed in the form of pattern indicator data. In this case, as described above with reference to FIGS. 9 to 11, a pattern counter may be provided for each electrode sheet. In addition, the pattern indicator data of each electrode sheet may be corrected based on a change in an offset length of each electrode sheet.

The corrected position data of each electrode sheet may be transmitted to the servers of the roll map generator 200. Therefore, for each electrode sheet moving in the winding process, roll maps including accurately corrected position data and measurement data and/or inspection data corresponding to the corrected position data can be generated.

(Fifth Embodiment)

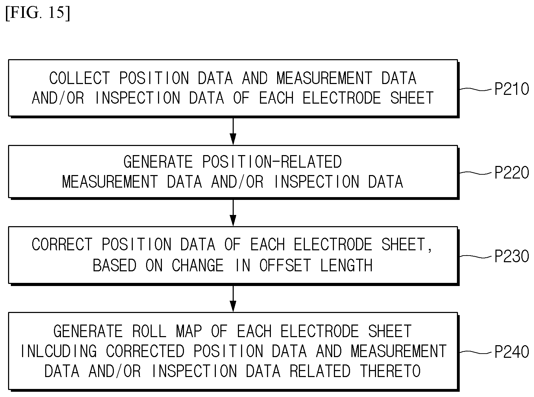

FIG. 15 is a flowchart of a battery manufacturing method according to embodiments.

The present embodiment relates to a battery manufacturing method in which a plurality of electrode sheets moving between unwinders and one winder are cut to a predetermined length by a cutter and wound together by the winder to manufacture an electrode assembly.

Referring to FIGS. 13 and 15, in P210, position data (coordinate data CD and/or pattern indicator data) indicating a position of each electrode sheet moving between each of the unwinders and the winder and measurement data and/or inspection data of each moving electrode sheet may be collected. The position data may be collected by the controller 140'. As described above, the inspection data or measurement data may be collected by an inspecting device or a measuring device.

Next, in P220, position-related measurement data and/or inspection data of each electrode sheet may be generated by relating the position data to the measurement data and/or inspection data. The position-related measurement data and/or inspection data may be generated by a processor of the measuring device as described above.

Next, in P230, the position-related measurement data and/or the inspection data is corrected based on a change in an offset length. The position data of each electrode sheet is corrected based on a change in an offset length when the offset length, which is a length of each electrode sheet between the unwinder or cutter and a position on each electrode sheet at which the measurement data and/or inspection data is collected, changes. In this case, position data of each electrode sheet collected based on a sensing signal from a position measuring device (e.g., a rotary encoder or pattern counter) installed at a side of the unwinder or cutter at a point in time when the measurement data and/or inspection data is collected may be corrected by adding or subtracting the offset length to or from the position data. The correction of the position data may be performed by the measuring device and/or inspecting device or the controller 140'.

Next, in P240, the corrected position data of each electrode sheet and measurement data CMD and/or inspection data of each electrode sheet related to the corrected position data may be transmitted to the roll map generator 200. The servers of the roll map generator 200 may generate a roll map, based on the transmitted data. The roll map may be generated by one of the servers 230, 240, and 250. The roll map includes the position data of each electrode sheet and the measurement data and/or inspection data related thereto and thus data reliability improves.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

(Reference Numerals)

| 10, 20: | battery manufacturing system | | | | |
|---|---|---|---|---|---|
| 100: | battery manufacturing apparatus | | | | |
| 400: | roll map generator | | | | |
| 111: | unwinder, | 113: | rewinder, | 115: | processing device |
| 121, 123: | rotary encoder | | | | |
| 13: | measuring device, | 131P: | sensing part, | 131: | processor |
| 140, 141, 143: | controllers | | | | |
| 201, 210, 220, 230, 240, 250: | server | | | | |

## Claims

1. A battery manufacturing system comprising:

   a position measuring device configured to generate a sensing signal by sensing a position of an electrode sheet moving between an unwinder and a rewinder;
   a controller configured to collect position data of the electrode sheet, based on the sensing signal; and
   a measuring device and/or inspecting device configured to collect measurement data and/or inspection data of the moving electrode sheet and generate position-related measurement data and/or inspection data by relating the position data to the measurement data and/or inspection data,
   wherein at least one of the controller or the measuring device and/or inspecting device corrects the position data of the electrode sheet based on a change in an offset length, the offset length being a length of the electrode sheet between the unwinder or the rewinder and a position on the electrode sheet at which the measurement data and/or inspection data is collected.

2. The battery manufacturing system of claim 1, wherein the offset length comprises a length of the electrode sheet in a buffer section in which the length of the electrode sheet changes according to tension of the electrode sheet.

3. The battery manufacturing system of claim 1, wherein the position data comprises at least one of:

   coordinate data including coordinates indicating positions on the electrode sheet; and
   pattern indicator data on a pattern electrode on which a coated portion and an uncoated portion are repeated in a longitudinal direction of the electrode sheet.

4. The battery manufacturing system of claim 1, wherein the position measuring device comprises at least one of:

   an encoder configured to generate at least one of an unwinding amount signal and a winding amount signal of the electrode sheet; or
   a pattern counter configured to count a pattern indicator on the pattern electrode.

5. The battery manufacturing system of claim 1, wherein at least one of the controller the measuring device and/or inspecting device corrects the position data by subtracting or adding the offset length from or to position data of the electrode sheet collected based on a sensing signal from the position measuring device installed at a side of the unwinder or a side of the rewinder at a point in time when the measurement data and/or inspection data is collected.

6. The battery manufacturing system of claim 1, further comprising a server configured to generate a roll map including the corrected position data and the measurement data and/or inspection data related to the corrected position data.

7. A battery manufacturing method comprising:

   collecting position data indicating a position of an electrode sheet moving between an unwinder and a rewinder and measurement data and/or inspection data of the moving electrode sheet;
   generating position-related measurement data and/or inspection data by relating the position data to the measurement data and/or inspection data; and
   correcting the position data of the electrode sheet based on a change in an offset length, the offset length being a length of the electrode sheet between the unwinder or the rewinder and a position on the electrode sheet at which the measurement data and/or inspection data is collected.

8. The battery manufacturing method of claim 7, wherein the offset length comprises a length of the electrode sheet in a buffer section in which the length of the electrode sheets changes according to tension of the electrode sheet.

9. The battery manufacturing method of claim 7, wherein the position data comprises at least one of:

coordinate data including coordinates indicating positions on the electrode sheet; and
pattern indicator data on a pattern electrode on which a coated portion and an uncoated portion are repeated in a longitudinal direction of the electrode sheet.

10. The battery manufacturing method of claim 9, wherein the coordinate data is collected based on at least one of an unwinding amount signal and a winding amount signal of the electrode sheet generated by an encoder.

11. The battery manufacturing method of claim 9, wherein the pattern indicator data is calculated based on a pattern pitch and a signal generated by the encoder, the pattern pitch being a distance between a coated portion and a neighboring coated portion on the pattern electrode.

12. The battery manufacturing method of claim 7, wherein the correcting comprises correcting the position data by subtracting or adding the offset length from or to position data of the electrode sheet collected based on a sensing signal from a position measuring device installed at a side of the unwinder or a side of the rewinder at a point in time when the measurement data and/or inspection data is collected.

13. The battery manufacturing method of claim 7, further comprising generating a roll map including the corrected position data and the measurement data and/or inspection data related to the corrected position data.

14. A battery manufacturing system comprising:

a plurality of position measuring devices configured to generate a sensing signal by sensing positions of a plurality of electrode sheets moving between a plurality of unwinders and a winder;
a controller configured to collect position data of each of the plurality of electrode sheets, based on the sensing signal;
a plurality of measuring devices and/or inspecting devices configured to collect measurement data and/or inspection data of each of the moving electrode sheets and generate position-related measurement data and/or inspection data by relating the position data to the measurement data and/or inspection data;
a plurality of cutters provided before the winder and configured to cut each of the electrode sheets by a predetermined length; and
the winder configured to wind each of the cut electrode sheets to manufacture an electrode assembly,
wherein the plurality of measuring devices and/or inspecting devices or the controller corrects the position data of the electrode sheet based on a change in an offset length, the offset length being a length of the electrode sheet between the unwinder or the cutter and a position on each of the plurality of electrode sheets at which the measurement data and/or inspection data is collected.

15. A battery manufacturing method in which a plurality of electrode sheets moving between a plurality of unwinders and a winder are cut by a predetermined length by a cutter and wound together by the winder to manufacture an electrode assembly, the battery manufacturing method comprising:

collecting position data indicating a position of each of the plurality of electrode sheets moving between each of the plurality of unwinders and the winder and measurement data and/or inspection data of each of the moving electrode sheets;
generating position-related measurement data and/or inspection data of each of the plurality of electrode sheets by relating the position data to the measurement data and/or inspection data; and
correcting the position data of each of the plurality of electrode sheets based on a change in an offset length, the offset length being a length of each of the plurality of electrode sheets between each of the plurality of unwinders or the cutter and a position on each of the plurality of electrode sheets at which the measurement data and/or inspection data is collected.

[FIG. 1]

[FIG. 2]

[FIG. 3]

VRM

| | C1 | | C2 | | C3 | | C4 | | C5 |

X7    X6    X5    X4    X3    X2    X1

Y

X

VS6    VS5    VS4    VS3    VS2    VS1

[FIG. 4]

117,119

r1    R1    R1    r1

FR

Hmax

MR

R1    R1    R1

OL_b_max=6

[FIG. 5]

117,119

r1    R1    R1    r1

FR

MR

Hmin

R1    R1    R1

OL_b_min=1.5

[FIG. 6]

[FIG. 7]

[FIG. 8]

ES_p

PATTERN COATING

1

(TD)
Y

2    2    1    2

X
(MD)

[FIG. 9]

125

1    2

ES_p

113

123

[FIG. 10]

[FIG. 11]

[FIG. 12]

```
┌─────────────────────────────────────────────┐
│   COLLECT POSITION DATA AND MEASUREMENT DATA  │
│   AND/OR INSPECTION DATA OF ELECTRODE SHEET   │──── P110
└─────────────────────────────────────────────┘
                      │
                      ▼
┌─────────────────────────────────────────────┐
│          GENERATE POSITION-RELATED            │
│    MEASUREMENT DATA AND/OR INSPECTION DATA     │──── P120
└─────────────────────────────────────────────┘
                      │
                      ▼
┌─────────────────────────────────────────────┐
│   CORRECT POSITION DATA OF ELECTRODE SHEET,   │
│      BASED ON CHANGE IN OFFSET LENGTH          │──── P130
└─────────────────────────────────────────────┘
                      │
                      ▼
┌─────────────────────────────────────────────┐
│    GENERATE ROLL MAP INLCUDING CORRECTED      │
│  POSITION DATA AND MEASUREMENT DATA AND/OR    │──── P140
│     INSPECTION DATA RELATED THERETO           │
└─────────────────────────────────────────────┘
```

[FIG. 13]

[FIG. 14]

EP 4 760 839 A1

30

[FIG. 15]

```
┌─────────────────────────────────────────────┐
│   COLLECT POSITION DATA AND MEASUREMENT DATA  │ ── P210
│  AND/OR INSPECTION DATA OF EACH ELECTRODE SHEET│
└─────────────────────────────────────────────┘
                      │
                      ▼
┌─────────────────────────────────────────────┐
│          GENERATE POSITION-RELATED            │ ── P220
│   MEASUREMENT DATA AND/OR INSPECTION DATA     │
└─────────────────────────────────────────────┘
                      │
                      ▼
┌─────────────────────────────────────────────┐
│  CORRECT POSITION DATA OF EACH ELECTRODE SHEET,│ ── P230
│       BASED ON CHANGE IN OFFSET LENGTH        │
└─────────────────────────────────────────────┘
                      │
                      ▼
┌─────────────────────────────────────────────┐
│    GENERATE ROLL MAP OF EACH ELECTRODE SHEET  │
│ INLCUDING CORRECTED POSITION DATA AND MEASUREMENT│ ── P240
│   DATA AND/OR INSPECTION DATA RELATED THERETO │
└─────────────────────────────────────────────┘
```

## INTERNATIONAL SEARCH REPORT

| | International application No. |
|---|---|
| | **PCT/KR2025/000830** |

**A. CLASSIFICATION OF SUBJECT MATTER**

**H01M 10/04**(2006.01)i; **H01M 4/04**(2006.01)i; **G01B 21/02**(2006.01)i

According to International Patent Classification (IPC) or to both national classification and IPC

**B. FIELDS SEARCHED**

Minimum documentation searched (classification system followed by classification symbols)

H01M 10/04(2006.01); B05C 11/10(2006.01); B65H 43/04(2006.01); H01G 13/02(2006.01); H01M 2/26(2006.01); H01M 4/04(2006.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 전극 시트(electrode sheet), 오프셋 길이(offset length), 교정 (calibration), 롤맵(roll map)

**C. DOCUMENTS CONSIDERED TO BE RELEVANT**

| Category* | Citation of document, with indication, where appropriate, of the relevant passages | Relevant to claim No. |
|---|---|---|
| X | KR 10-2023-0026865 A (LG ENERGY SOLUTION, LTD.) 27 February 2023 (2023-02-27)<br>See paragraphs [0051]-[0058], claims 5 and 11 and figures 2-6. | 1,3-7,9-13 |
| Y | | 2,8,14-15 |
| Y | JP 2016-001624 A (CKD CORP.) 07 January 2016 (2016-01-07)<br>See paragraphs [0046]-[0059] and figure 4. | 2,8,14-15 |
| A | KR 10-2023-0066855 A (LG ENERGY SOLUTION, LTD.) 16 May 2023 (2023-05-16)<br>See claims 1-12 and figures 2-8. | 1-15 |
| A | JP 2002-110148 A (CKD CORP.) 12 April 2002 (2002-04-12)<br>See paragraphs [0042]-[0102] and figures 1-6. | 1-15 |
| A | JP 2012-089351 A (CKD CORP.) 10 May 2012 (2012-05-10)<br>See paragraphs [0024]-[0066] and figures 1-5. | 1-15 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 April 2025** | **17 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/000830**

| Patent document cited in search report | | | Publication date (day/month/year) | Patent family member(s) | | | Publication date (day/month/year) |
|---|---|---|---|---|---|---|---|
| KR | 10-2023-0026865 | A | 27 February 2023 | US | 2023-0097728 | A1 | 30 March 2023 |
| JP | 2016-001624 | A | 07 January 2016 | CN | 106532135 | A | 22 March 2017 |
| | | | | CN | 106532135 | B | 26 March 2019 |
| | | | | JP | 6101328 | B2 | 22 March 2017 |
| KR | 10-2023-0066855 | A | 16 May 2023 | CN | 116868359 | A | 10 October 2023 |
| | | | | EP | 4283695 | A1 | 29 November 2023 |
| | | | | EP | 4283695 | A4 | 18 September 2024 |
| | | | | JP | 2024-514744 | A | 03 April 2024 |
| | | | | JP | 2025-026887 | A | 26 February 2025 |
| | | | | JP | 7585511 | B2 | 18 November 2024 |
| | | | | KR | 10-2661396 | B1 | 29 April 2024 |
| | | | | US | 2024-0151524 | A1 | 09 May 2024 |
| | | | | US | 2024-0401945 | A1 | 05 December 2024 |
| | | | | WO | 2023-080747 | A1 | 11 May 2023 |
| JP | 2002-110148 | A | 12 April 2002 | None | | | |
| JP | 2012-089351 | A | 10 May 2012 | CN | 102456930 | A | 16 May 2012 |
| | | | | CN | 102456930 | B | 19 March 2014 |
| | | | | JP | 5211135 | B2 | 12 June 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240009448
- KR 1020220134303